**Europäisches Patentamt**

**European Patent Office**

**Office européen des brevets**

(19)

(11) Veröffentlichungsnummer: **0 022 158**
**B1**

(12) **EUROPÄISCHE PATENTSCHRIFT**

(45) Veröffentlichungstag der Patentschrift:
**27.07.83**

(21) Anmeldenummer: **80102774.9**

(22) Anmeldetag: **20.05.80**

(51) Int. Cl.³: **B 01 D 19/00,** B 01 D 3/22,
C 08 F 6/24

(54) **Kolonne mit Schrägloch-Böden.**

(30) Priorität: **10.07.79 DE 2927787**

(43) Veröffentlichungstag der Anmeldung:
**14.01.81 Patentblatt 81/2**

(45) Bekanntmachung des Hinweises auf die Patenterteilung:
**27.07.83 Patentblatt 83/30**

(84) Benannte Vertragsstaaten:
**AT BE CH FR GB IT LI NL SE**

(56) Entgegenhaltungen:
EP-A-0 001 448      DE-C-871 594
DD-A-86 168         FR-A-1 153 471
DE-A-1 519 646      FR-A-1 172 811
DE-A-1 946 159      FR-A-2 309 262
DE-A-1 953 994      FR-A-2 347 073
DE-A-2 027 655      FR-A-2 359 848
DE-A-2 241 311      SU-A-602 203
DE-B-1 032 219      US-A-3 156 746
DE-B-1 253 672      US-A-3 550 916
DE-C-335 552

(73) Patentinhaber: **CHEMISCHE WERKE HÜLS AG,**
**Postfach 1320, D-4370 Marl 1 (DE)**

(72) Erfinder: **Bollenrath, Franz-Michael, Dr., Lipper Weg 197,**
**D-4370 Marl (DE)**
Erfinder: **Bevers, Klaus, Dr., Hubertustal 17,**
**D-4421 Reken 4 (DE)**
Erfinder: **Scheppers Gerd, Dr. c/o hüls do Brazil Ltda.,**
**Av. Paulister Nr. 465/475-10. Andar, BR-01311 Sao**
**Paulo-S.P. (BR)**
Erfinder: **Rauth, Peter, Dr., Ostermannstrasse 35,**
**D-4630 Bochum (DE)**

Kolonne mit Schrägloch-Böden

Die Erfindung betrifft eine Kolonne mit übereinander angeordneten Schrägloch-Böden zur Entfernung von flüchtigen Bestandteilen aus Suspensionen mittels eines Gases.

Zweck der Erfindung ist eine Entgasungskolonne, die einen möglichst wirksamen Kontakt zwischen Suspension und Gas ermöglicht. Die Kolonnenböden sollen wirtschaftlich herstellbar sein. Ablagerungen aus der Suspension auf den Kolonnenböden sollen auch im Langzeitbetrieb an der Entstehung gehindert werden. Beim Wechsel der zu entgasenden Suspensionen soll die Suspension schnell und rückstandsfrei ablaufen; auch größere Teilchen-Aggregate, die gegebenenfalls in der Suspension vorhanden sind, sollen leicht ausgespült werden können.

Bekanntermaßen läßt sich z. B. monomeres Vinylchlorid aus in Wasser suspendiertem Polyvinylchlorid (PVC) mittels Wasserdampf austreiben. Die hierfür eingesetzten Kolonnen sind bisher mit allen bekannten Böden ausgestattet worden. Erfahrungsgemäß sind bei Sieb-, Glocken- und Ventilböden Ablagerungen bei der üblichen Kolonnenbauweise unvermeidbar. Einige Böden lassen ohne Sondervorrichtungen den rückstandsfreien Ablauf der Suspension nicht zu.

In der DE-C-871 594 ist eine Kolonne mit Kittelböden aus Streckmetall beschrieben, die eventuell Zu- und Ablaufschächte hat. Die Böden werden stets als Regenböden betrieben, bei denen Gas und Flüssigkeit innerhalb der Bodenöffnungen einander entgegenströmen. Bei diesen Böden können der freie Querschnitt und die Lochgröße nicht beliebig variiert werden. Die Kolonne zeigt erst bei großem Gasdurchsatz einen Austauscheffekt. Die notwendigen Gasmengen sind jedoch zum Entfernen flüchtiger Bestandteile aus Dispersionen unwirtschaftlich und technisch nicht sachgerecht.

In der DE-B-1 032 219 wird eine Kolonne mit übereinander angeordneten Böden sowie mit Zu- und Ablaufschächten beschrieben, die zur Entfernung flüchtiger Bestandteile aus Flüssigkeiten mittels eines Gases dient. Die Böden haben aus **U**-förmigen oder kreisbogenförmigen Einschnitten aufgebogene ebene Laschen. Die Laschen hängen stets nur an einer Seite an dem Boden. Die Gasaustrittsöffnungen sind an drei Seiten offen, oder der Laschenrand ist maulartig gebogen. Damit wird die freie Öffnung des Bodens recht groß. Sie ist viel zu groß, um diese Kolonne bei kleinem Gasdurchsatz ohne Durchregnen der Böden betreiben zu können. Das Gas tritt unter den Laschen fächerartig breit aus, nicht in Form eines relativ schmalen Strahls.

Diese Böden haben unter den Zulaufschächten keine Laschen und keine Gasaustrittsöffnungen. Damit entstehen »tote Ecken« unter den Zulaufschächten; dort bilden sich Ablagerungen, wenn diese Kolonne zur Entgasung von Suspensionen benutzt wird. Falls bei diesen Böden der freie Querschnitt durch Herabsetzen der Anzahl der Laschen verkleinert wird, steigt zwangsläufig der Abstand zwischen den Laschen. Auf den Flächen zwischen den Laschen bilden sich dann ebenfalls Ablagerungen aus den Suspensionen.

Der Laschenwinkel ist innerhalb eines Bodens veränderlich, an der Einlaufseite des Bodens liegt er zwischen 30° und 60°. Damit ändert sich auch die mittlere Austrittsrichtung des Gases in bezug auf die Bodenfläche. Der vom Zulaufschacht zum Ablaufschacht eines Bodens abnehmende Laschenwinkel ist notwendig, um den Gasdurchsatz möglichst groß und größer als bei Glockenböden zu machen.

In der DE-B-1 253 672 wird eine Kolonne beschrieben, bei der die meisten Böden gegen die Kolonnenwand gar nicht abgedichtet sind. Hier werden Ringbleche eingesetzt, die gleichzeitig als Abstandshalter zwischen den Böden dienen. Die Ringbleche liegen nicht an der Kolonnenwand an. Der Zwischenraum zwischen Kolonnenwand und Ringblechsteg ist durch Löcher im Ringblechsteg mit dem Innern der Kolonne verbunden. In diesem Zwischenraum strömt Flüssigkeit abwärts, die auf diesem Weg nicht mit dem Gas in Berührung kommt.

Diese Kolonne kann benutzt werden für Flüssigkeiten, aus denen sich nichts ablagern kann. Bei Suspensionen dagegen lassen sich störende Ablagerungen in dieser Kolonne zumindest am Rand des unteren Bodens und am Rand der Böden, bei denen eine Packungsschnur zwecks Unterbindung der Strömung im Zwischenraum eingelegt ist, mit Sicherheit nicht vermeiden. Die an diesen Stellen befindliche Flüssigkeit kann aus der Kolonne gar nicht ablaufen.

Die Kolonne hat auch unter den eventuell vorhandenen Zulaufschächten Löcher. Zumindest an diesen Stellen regnet der Boden bei kleinem Gasdurchsatz durch. Das Durchregnen kann erst mit einem großen Gasdurchsatz verhindert werden. Falls keine Zulaufschächte vorhanden sind, werden alle Böden als Regenböden betrieben.

In der Patentschrift US-A-3 156 746 ist eine andere Anordnung von Streckmetallböden angegeben, die ebenfalls ausschließlich als Regenböden betrieben werden. Im übrigen gilt für diese Böden das oben zu DE-C-871 594 Gesagte.

Damit stellt sich die Aufgabe, eine Entgasungskolonne mit Böden auszurüsten, bei denen der freie Querschnitt des Bodens nach Größe und Lage für die Entgasung der vorliegenden Suspension optimal gewählt werden kann, und deren Löcher einen Querschnitt haben, der wesentlich größer ist als die mittlere Größe der Teilchenagglomerate. Die Löcher sollen ein schnelles Leerlaufen der Kolonne ermöglichen, der Boden darf während der Entgasung jedoch nicht durchregnen.

Die Aufgabe wird erfindungsgemäß gelöst durch eine mit Zu- und Ablaufschächten versehene Kolonne, deren Böden aus vergleichsweise dünnen Blechen bestehen und mit schrägen Löchern versehen sind, deren Achse einen relativ kleinen Winkel mit der Bodenfläche bildet (»Schrägloch-Boden«) und die durch folgende Merkmale gekennzeichnet ist:

Die Schräglöcher sind auch in dem Bodenbereich angebracht, der direkt unter einem Zulaufschacht liegt. Der Schrägloch-Boden ist gegen die Kolonnenwand abgedichtet. Die Gasaustrittsfläche eines Schräglochs ist mindestens 10 Grad und höchstens 20 Grad gegen die Senkrechte geneigt. Die offene Fläche der Schrägloch-Böden (im rechten Winkel zur Gasaustrittsfläche betrachtet) beträgt weniger als 10% der Bodenfläche. Die Gasaustrittsfläche des Schrägloches hat die Form eines Halbkreises oder eines kleineren Kreissegments (siehe Fig. 3). Die Kreissegmente sind weniger als 6 mm hoch, der Kreissegment-Radius ist kleiner als 7 mm.

Die Schräglöcher innerhalb eines Bodens sind bevorzugt gleichgerichtet und weisen bei in der Nähe der Kolonnenwand angebrachten Schächten im wesentlichen vom Zulaufschacht zum Ablaufschacht. Innerhalb eines Bodens ist der Neigungswinkel der Gasaustrittsflächen für alle Schräglöcher konstant.

Die Schräglöcher haben einen dreieckigen Querschnitt in einer Ebene, die senkrecht zur Bodenfläche steht und parallel zur Gasaustrittsrichtung verläuft.

Die Gasaustrittsfläche eines Schräglochs ist damit wesentlich größer als der Querschnitt eines Loches in einem üblichen Siebboden für die Entgasung von Flüssigkeiten. Die Schräglöcher sind im allgemeinen gleichmäßig über den Boden verteilt, z. B. in einer Dreiecksteilung. Das Teilungsmaß richtet sich nach der vorgeschriebenen offenen Fläche des Bodens und nach der Größe der Gasaustrittsfläche eines Schrägloches.

Die Achsen aller Schräglöcher eines Bodens können zueinander parallel gerichtet sein oder reihenweise oder zonenweise einander entgegengerichtet. Bei Böden mit radialer Flüssigkeitsströmung können sie radial nach außen oder radial nach innen weisen, bei tangentialer Flüssigkeitsströmung liegen die Achsen der Schräglöcher tangential; auch in diesem Falle können die Schräglochachsen zonenweise einander entgegengerichtet sein.

Bei großen Kolonnenquerschnitten werden die Böden auf der Oberseite durch Bleche stabilisiert.

Außer mehreren horizontal angeordneten Schräglochböden, Zu- und Ablaufschächten und gegebenenfalls Stabilisierungsblechen hat die Entgasungskolonne keine weiteren Einbauten. Die Schächte können an beliebigen Stellen der Böden angebracht sein und mit Wehren oder wehrartigen Rändern versehen sein. Für jeden Boden kann mehr als ein Zulaufschacht und mehr als ein Ablaufschacht vorhanden sein.

Für das Austreiben von monomerem Vinylchlorid aus in Wasser suspendiertem PVC mittels durchgeblasenem Wasserdampf werden Schräglochböden mit bevorzugt folgenden Merkmalen eingesetzt:

Der Radius des Kreises, dessen Kreissegment die Dampfaustrittsfläche eines Schrägloches bildet, ist kleiner als 7 mm, bevorzugt 4 mm. Die Höhe des Kreissegmentes ist kleiner als 6 mm, bevorzugt 3 mm. Die offene Fläche des Bodens — im rechten Winkel zur Dampfaustrittsfläche betrachtet — beträgt weniger als 10%, bevorzugt 2 bis 7%, der Bodenfläche. Bei dieser Ausführung des Schräglochbodens beträgt das Teilungsmaß bei Dreiecksteilung etwa 18 mm.

Der Schräglochboden hat folgende Vorteile gegenüber herkömmlichen Böden:

Die Böden sich auch dann, wenn sie aus dünnen Blechen gefertigt werden und entsprechend leicht sind, mechanisch recht stabil. Die für die Entgasung benutzten Schräglöcher dienen unmittelbar als Ablauflöcher, wenn die Kolonne entleert werden soll. Auch die gegebenenfalls vorhandenen größeren Teilchen und Teilchenagglomerate laufen einwandfrei aus der Kolonne ab.

Das Gas erhält durch die Schräglöcher in der Umgebung der Gasaustrittsfläche eine zur Bodenfläche parallele Geschwindigkeitskomponente, die größer ist als die Komponente senkrecht zur Bodenfläche. Dadurch wird die Flüssigkeit auch direkt auf der Bodenfläche ständig in Bewegung gehalten und intensiv gemischt. »Tote Ecken« treten nicht auf. Der Mischeffekt läßt sich durch eine Anordnung der Schräglöcher mit auf einem Boden zonenweise oder sektorenweise entgegengerichteten Lochachsen verstärken. Das Strömungsbild auf dem Schräglochboden läßt sich durch andere Richtungsverteilungen der Schräglochachsen beliebig verändern. Damit lassen sich auch im Dauerbetrieb über mehrere Monate Ablagerungen in der gesamten Kolonne oder in den Löchern sicher vermeiden.

Der Strömungswiderstand für das Gas ist wegen der großen einzelnen Schräglöcher vergleichsweise gering, auch dann, wenn die offene Fläche des Bodens klein ist.

Der Schräglochboden ist wenig empfindlich gegen Durchregnen trotz der relativ großen Gasaustrittsfläche eines einzelnen Schrägloches. Selbst die direkt unter einem Zulaufschacht angebrachten Schräglöcher regnen nicht durch. Der Schräglochboden darf stärker gegen die Horizontale geneigt sein als ein üblicher Siebboden, bevor er durchregnet.

Die erfindungsgemäße Kolonne mit Schräglochböden ist besonders vorteilhaft einsetzbar bei häufigem Wechsel der Zusammensetzung der zu entgasenden Suspensionen. Zwischen derartigen Wechseln läuft die Suspension aus der Kolonne mit Schräglochböden restlos heraus.

Bei dickflüssigen Suspensionen wird die Neigung der Oberfläche der Suspension auf einem Boden zwischen Zulauf und Ablauf durch die zur Bodenfläche teilweise parallele Gasströmung abgebaut.

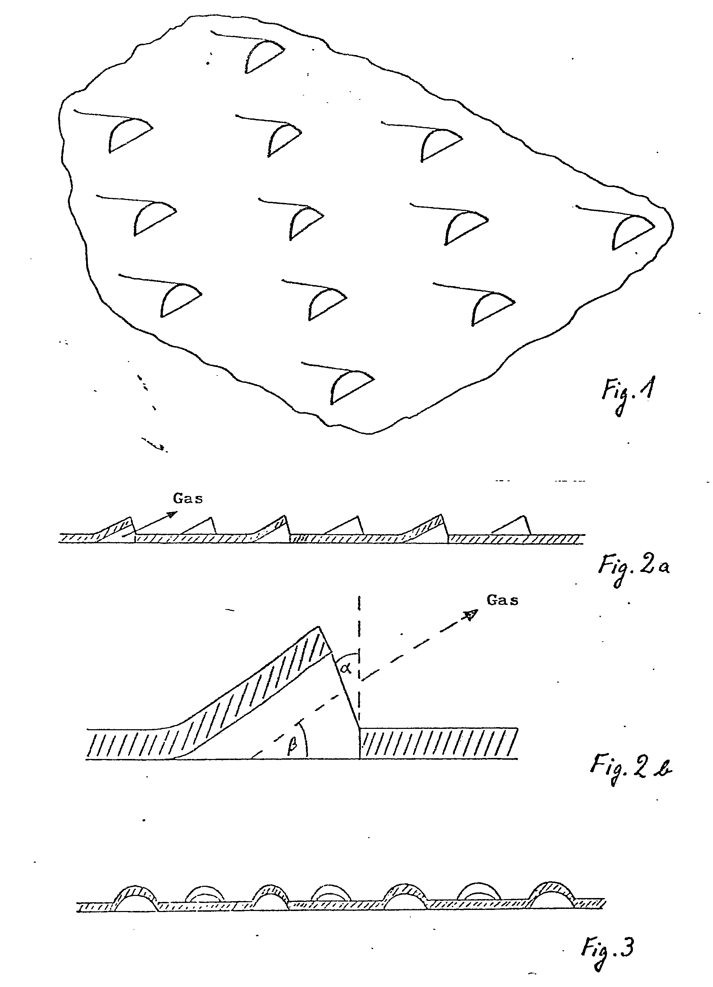

Fig. 1 zeigt einen Ausschnitt aus einem Schräglochboden in Schrägaufsicht.

Fig. 2a ist ein Querschnitt durch eine Lochreihe des Schräglochbodens in Gasaustrittsrichtung. In

Fig. 2b ist der Neigungswinkel $\alpha$ der Gasaustrittsfläche gegen die Senkrechte auf der Bodenfläche eingezeichnet sowie der Neigungswinkel $\beta$ der Gasaustrittsrichtung gegen die Bodenfläche.

Fig. 3 ist ein Querschnitt durch eine Lochreihe des Schräglochbodens, der senkrecht zu dem Querschnitt in Fig. 2a steht; hier sind die kreissegmentförmigen Gasaustrittsflächen der Schräglöcher zu erkennen.

Die Wirksamkeit einer vergleichsweise einfach gebauten Kolonne mit den erfindungsgemäßen Schräglochböden bei der Entgasung von PVC mittels Wasserdampf zeigt folgendes Beispiel. Die wesentlichen Maße der Kolonne sind:

| | |
|---|---|
| Kolonnendurchmesser | 30 cm |
| Anzahl der Schräglochböden | 8 |
| Abstand der Böden | 25 cm |
| Offene Fläche eines Bodens | 3,3% |
| Dampfaustrittsfläche | |
|     Höhe des Kreissegmentes | 3 mm |
|     Radius des Kreissegmentes | 4 mm |
| Durchmesser der | |
| Zu- und Ablaufschächte | 8 cm |
| Wehrhöhe | 13 cm |

Jeder Boden hat einen Zulauf- und einen Ablaufschacht, die jeweils in der Nähe der Kolonnenwand und zueinander diametral angebracht sind. Die Achsen der Schräglöcher jedes Bodens sind zueinander parallel gerichtet und weisen auf jedem Boden im wesentlichen vom Zulauf zum Ablauf.

Eine wäßrige auf 70° C aufgeheizte PVC-Suspension mit einem Feststoffgehalt von 27 Gewichtsprozent und einer mittleren Teilchengröße von 150 μm wurde mit 630 kg/h auf den oberen Schräglochboden dieser Kolonne gegeben. Der Feststoff enthielt 6000 ppm an monomerem Vinylchlorid. Dem unteren Schräglochboden strömte eine Dampfmenge von 0,27 kg/kg Feststoff zu. Nach einer Verweilzeit von 5 Minuten in der Kolonne enthielt die vom unteren Boden ablaufende Suspension weniger als 60 ppm an monomerem Vinylchlorid im Feststoff. Der untere Kolonnenboden hatte eine Temperatur von 102° C.

Dieses Entgasungsergebnis entspricht voll den mit bekannten andersartig aufgebauten Kolonnen bisher erreichten Werten, wobei die Kolonne mit Schräglochböden gegenüber den bekannten Kolonnen die obengenannten Vorteile aufweist.

**Patentansprüche**

1. Kolonne mit übereinander angeordneten Schrägloch-Böden sowie Zu- und Ablaufschächten zur Entfernung von flüchtigen Bestandteilen aus Suspensionen mittels eines Gases, gekennzeichnet durch

— Schrägloch-Böden, die auch unter den Zulaufschächten mit Schräglöchern versehen sind und
— die am Rand gegen die Kolonnenwand abgedichtet sind,
— Gasaustrittsflächen, die um mindestens 10 Grad und höchstens 20 Grad gegen die Senkrechte auf der Bodenfläche geneigt sind,
— mit einer offenen Fläche der Schrägloch-Böden (im rechten Winkel zur Gasaustrittsfläche betrachtet), die weniger als 10% der Bodenfläche beträgt,
— mit kreissegmentförmigen Gasaustrittsflächen,
— die weniger als 6 mm hoch sind und
— deren Kreissegment-Radius kleiner als 7 mm ist.

2. Kolonne mit Schrägloch-Böden nach Anspruch 1, gekennzeichnet durch

— Schräglöcher, die gleichgerichtet sind und (bei in der Nähe der Kolonnenwand angebrachten Schächten) im wesentlichen vom Zulaufschacht zum Ablaufschacht weisen.

3. Kolonne mit Schrägloch-Böden nach Anspruch 1, gekennzeichnet durch

— einen Neigungswinkel der Gasaustrittsflächen, der für alle Schräglöcher innerhalb eines Bodens konstant ist.

4. Schrägloch-Böden nach Anspruch 1, gekennzeichnet durch

— Schräglöcher mit einem dreieckigen Querschnitt in einer Ebene, die senkrecht zur Bodenfläche steht und parallel zur Gasaustrittsrichtung verläuft.

5. Kolonne nach Anspruch 1 für die Entfernung von monomerem Vinylchlorid aus in Wasser suspendiertem Polyvinylchlorid mittels durchgeblasenem Wasserdampf, gekennzeichnet durch

— Schrägloch-Böden mit einer offenen Fläche, die (im rechten Winkel zur Dampfaustrittsfläche betrachtet) 2 bis 7% der Bodenfläche umfaßt,
— deren kreissegmentförmige Dampfaustrittsfläche 3 mm hoch ist und
— deren Kreissegment-Radius 4 mm groß ist.

## Claims

1. A column having obliquely perforated trays arranged above one another and provided with feed shafts and discharge shafts, for use in the removal of volatile constituents from a suspension by means of a gas, characterised by

— obliquely perforated trays which are provided with oblique holes even under the feed shafts and which
— are sealed at the edge against the column wall,
— gas release areas which are inclined on the surface by at least 10° and at most 20° relative to the vertical,
— having an open area of the obliquely perforated trays (viewed at right angles to the gas release area), which is less than 10% of the tray area, and
— having gas release areas which have the form of segments of a circle and which
— have a height of less than 6 mm,
— the radius of the circle of which the segments form part being less than 7 mm.

2. A column having obliquely perforated trays, according to claim 1, characterised by

— oblique holes which are arranged in the same direction and point essentially from the feed shaft to the discharge shaft (in the case of the latter being fitted in the vicinity of the column wall).

3. A column having obliquely perforated trays, according to claim 1, characterised by

— an angle of inclination of the gas release areas, which is constant for all the oblique holes within one tray.

4. Obliquely perforated trays according to claim 1, characterised by

— oblique holes having a triangular cross-section in a plane which is perpendicular to the tray surface and runs parallel to the direction of gas release.

5. A column according to claim 1, for use in the removal of monomeric vinyl chloride from polyvinyl chloride suspended in water by means of steam blown therethrough, characterised by

— obliquely perforated trays having an open area which (viewed at right angles to the vapour release area) comprises 2 to 7% of the tray area,
— the vapour release area in the form of segments of a circle being 3 mm high, and
— the radius of the circle of which the segments form part being 4 mm.

## Revendications

1. Colonne avec plateaux à trous obliques disposés les uns au-dessus des autres et cheminées d'alimentation et d'évacuation pour l'élimination de constituants volatils de suspensions au moyen d'un gaz, caractérisée par:

— des plateaux à trous obliques qui sont munis aussi de trous obliques en dessous des cheminées d'alimentation et
— qui sont rendus étanches au bord vis-à-vis de la paroi de la colonne,
— des surfaces de sortie de gaz qui sont inclinées de 10° au minimum et de 20° au maximum relativement à la perpendiculaire à la surface des plateaux,
— avec une surface ouverte des plateaux à trous obliques qui (considérée perpendiculairement à la surface de sortie de gaz), représente moins de 10% de la surface des plateaux,
— avec des surfaces de sortie de gaz en forme de secteur circulaire,
— qui ont une hauteur inférieure à 6 mm et
— dont le rayon de secteur circulaire est inférieur à 7 mm.

2. Colonne avec plateaux à trous obliques selon la revendication 1, caractérisée par

— des trous obliques qui sont dirigés dans le même sens et qui (dans le cas où les cheminées sont disposées au voisinage de la paroi de la colonne), sont pratiquement dirigés de la cheminée d'alimentation vers la cheminée d'évacuation.

3. Colonne avec plateaux à trous obliques selon la revendication 1, caractérisée par

— un angle d'inclinaison des surfaces de sortie de gaz qui est constant pour tous les trous obliques au sein d'un plateau.

4. Colonne avec plateaux à trous obliques selon la revendication 1, caractérisée par

— des trous obliques ayant une section triangulaire dans un plan qui est perpendiculaire à la surface du plateau et dirigé parallèlement à la direction de sortie des gaz.

5. Colonne selon la revendication 1, pour l'élimination du chlorure de vinyle monomère contenu dans du polychlorure de vinyle en suspension dans de l'eau, au moyen de vapeur d'eau injectée au travers, caractérisée par

— des plateaux à trous obliques présentant une surface ouverte qui (considérée perpendiculairement à la surface de sortie de vapeur), représente 2 à 7% de la surface des plateaux,

— dont la surface de sortie de vapeur en forme de secteur circulaire à une hateur de 3 mm et

— dont le rayon de secteur circulaire est de 4 mm.

Fig. 1

Gas

Fig. 2a

Gas

Fig. 2 b

Fig. 3